# EUROPÄISCHE PATENTSCHRIFT

(11) **EP 3 696 043 B1**
(45) Veröffentlichungstag und Bekanntmachung des Hinweises auf die Patenterteilung: **21.09.2022**
(21) Anmeldenummer: 20153931.9
(22) Anmeldetag: 27.01.2020
(51) Int. Cl.: B61D 19/02, E05F 1/06, B60J 5/02

(54) **NOTTÜR FÜR EIN SCHIENENFAHRZEUG**
EMERGENCY DOOR FOR A RAIL VEHICLE
PORTE D'URGENCE POUR UN VÉHICULE FERROVIAIRE

(30) Priorität: 29.01.2019 AT 500652019
(43) Veröffentlichungstag der Anmeldung: 19.08.2020
(73) Patentinhaber: EH Holding GmbH, 7531 Kemeten (AT)
(72) Erfinder: Hochwarter, Erwin, 7531 Kemeten (AT)
(74) Vertreter: Patentanwälte Pinter & Weiss OG

(56) Entgegenhaltungen:
- EP-A2- 2 169 168
- DE-C- 671 956
- DE-U- 7 138 691
- DE-U1-202012 004 501
- US-A- 1 691 759
- US-A- 4 216 725

## Beschreibung

Die gegenständliche Erfindung betrifft eine Nottür für ein Schienenfahrzeug, wobei die Nottür mittels Scharnieren um eine, insbesondere gegenüber einer Vertikalen geneigte, Schwenkachse nach innen verschwenkbar an einer Stirnseite des Schienenfahrzeugs anordenbar ist, wobei jedes Scharnier einen feststehenden Scharnierteil, der mit dem Schienenfahrzeug verbindbar ist, und einen beweglichen Scharnierteil, der mit der Nottür verbunden ist, aufweist.

Schienenfahrzeuge für den öffentlichen Nahverkehr haben üblicherweise eine Mehrzahl von seitlichen Türen an den einzelnen Wägen für den Zu- und Ausstieg der Passagiere. Diese Betriebstüren sind in der Regel auch mit einer Notfunktion für eine Notöffnung der Türen ausgestattet. Im öffentlichen Nahverkehr kann der Raum seitlich des Schienenfahrzeugs jedoch sehr beengt sein, sodass ein Notausstieg über die Betriebstüren unter Umständen schwierig sein kann. Ein Beispiel ist eine U-Bahngarnitur als Schienenfahrzeug, die in einem U-Bahntunnel zum Stehen kommt. U-Bahntunnel werden schon alleine aus Kostengründen sehr eng gebaut, sodass wenig Raum für einen Notausstieg seitlich des Schienenfahrzeuges bleibt. Daher weisen solche Schienenfahrzeuge für den öffentlichen Nahverkehr oftmals auch Nottüren an den Stirnseiten auf, entweder an beiden Stirnseiten oder nur an einer Stirnseite. An der Stirnseite ist üblicherweise ausreichend Platz für einen Notausstieg. Ebenso ist es damit möglich die Passagiere über eine stirnseitige Nottür auch in ein anderes Schienenfahrzeug umsteigen zu lassen. Für den Notausstieg ist daher oftmals auch eine Notstiege integriert. Eine solche nach außen öffnende stirnseitige Nottür kann beispielsweise der EP 2 763 881 B1 entnommen werden, in der eine nach außen und oben schwenkende Nottür gezeigt wird. Die WO 2011/013847 A2 zeigt eine nach außen und unten schwenkende stirnseitige Nottür. Aus der WO 2005/058666 A1 ist wiederum eine seitlich nach außen schwenkende stirnseitige Nottür bekannt. Allen diesen bekannten Nottüren ist gemein, dass diese nach außen öffnen.

Insbesondere im Zusammenhang mit Schienenfahrzeugen für den öffentlichen Nahverkehr ist es allerdings vorteilhaft, wenn die stirnseitige Nottür nach innen öffnet, weil damit das Schienenfahrzeug von außen leichter zugänglich ist und der Zwischenraum zwischen zwei Schienenfahrzeug verringert werden kann, was den Umstieg erleichtert. Für eine nach innen öffnende stirnseitige Nottür muss aber im Schienenfahrzeug ausreichend Platz vorgesehen werden.

Bei einem vertikalen stirnseitigen Ende des Schienenfahrzeugs ließe sich eine nach innen öffnende stirnseitige Nottür mit vertikaler Drehachse natürlich sehr einfach realisieren, wie beispielsweise in der EP 142 851 B1 oder der US 4,216,725 A gezeigt.

Aus gestalterischen Gründen ist das stirnseitige Ende eines Schienenfahrzeuges aber in der Regel nicht vertikal sondern schräg oder bombiert ausgeführt. Damit ist aber die Drehachse der stirnseitigen Nottür zwangsweise schräg angeordnet. Wenn die stirnseitige Nottür nun nach innen öffnet, würde das vom Scharnier entfernte Ende der Nottür aber in den Boden des Schienfahrzeuges fahren, was ein Öffnen verhindern würde. Daher müsste der Boden im Bereich der stirnseitigen Nottür entweder vertieft sein, oder die Nottür müsste höher angeschlagen werden, was aber zu einer Schwelle im Ausstiegsbereich führen würde. Beides ist aber aus Sicherheitsgründen wegen der entstehenden Stolpergefahr nachteilig und soll vermieden werden.

Was ebenso nicht vernachlässigt werden darf ist das Gewicht der stirnseitigen Nottür, das bei Betätigung bewegt werden muss. Es ist daher auch zu berücksichtigen, dass sich die Nottür leicht, insbesondere auch von Kindern oder älteren Personen, öffnen lässt. Mechanismen, die der Gewichtskraft von Türen entgegenwirken, sind beispielsweise aus der DE 671 956 C bekannt. Der darin beschriebene Mechanismus erlaubt jedoch keine Verschiebung in Richtung der Drehachse und ist daher für eine angedachte Anwendung bei einer nach innen öffnenden Nottür grundsätzlich ungeeignet.

Es ist daher eine Aufgabe der gegenständlichen Erfindung eine stirnseitige, nach innen öffnende Nottür anzugeben, mit der diese Probleme behoben werden können.

Diese Aufgabe wird erfindungsgemäß dadurch gelöst, dass zumindest ein Scharnier mit einer mechanischen Zwangsführung zwischen dem feststehenden Scharnierteil und dem beweglichen Scharnierteil ausgeführt ist, die beim Schwenken um die Schwenkachse den beweglichen Scharnierteil gegenüber dem feststehenden Scharnierteil in Richtung der Schwenkachse verschiebt und zumindest eine Federeinheit vorgesehen ist, die eine entgegen der Gewichtskraft der Nottür gerichtete Federkraft auf die Nottür ausübt. Auf diese Weise kann die Nottür beim Öffnen nach innen in das Schienenfahrzeug mittels der Zwangsführung in Richtung der Schwenkachse gehoben werden, um zu vermeiden, dass die Nottür aufgrund der schrägen Schwenkachse in den Boden des Schienenfahrzeugs fährt. Damit muss der Boden im Bereich der Nottür nicht vertieft werden und die Nottür muss auch nicht höher angeschlagen werden. Die erzielte Hubhöhe über den Schwenkwinkel der Nottür kann dabei auf einfache Weise durch die Gestaltung und Ausführung der Zwangsführung angepasst werden. Ebenso kann die Federkraft der Federeinheit an die Anwendung angepasst werden, um die gewünschte Gewichtskompensation zu realisieren, was insbesondere bei der Ausführung als Gasdruckfeder einfach möglich ist.

Die mechanische Zwangsführung wird konstruktiv einfach mit einer Gleitfläche am feststehenden oder beweglichen Scharnierteil, wobei die Gleitfläche gegenüber einer Normalen auf die Schwenkachse geneigt ist, und mit einem mit der Gleitfläche zusammenwirkenden Gleitelement am jeweils anderen Scharnierteil ausgeführt. Die erzielte Hubhöhe lässt sich so einfach durch den Neigungswinkel der Gleitfläche anpassen. Vorteilhafte Ausgestaltungen der mechanische Zwangsführung sind eine Kulissenführung mit einer Kulisse im feststehenden oder beweglichen Scharnierteil als Gleitfläche und mit einem in der Kulisse geführten Gleitelement oder als Steilgewinde mit einem Außengewinde mit zumindest einem Gewindegang am feststehenden oder beweglichen Scharnierteil als Gleitfläche und mit einem Innengewinde am anderen Scharnierteil als Gleitelement ausgeführt ist, wobei das Außengewinde in das Innengewinde geschraubt ist, oder mit geneigten axialen Enden an den Scharnierteilen, die aneinander liegend angeordnet sind.

Für eine kompakte Ausführung ist es vorteilhaft, wenn die zumindest eine Federeinheit an einem beweglichen Scharnierteil eines Scharniers der Nottür angreift, und dabei insbesondere zwischen feststehendem und beweglichem Scharnierteil angeordnet ist.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 ein stirnseitiges Ende eines Schienenfahrzeugs in einer Draufsicht,
Fig.2 ein stirnseitiges Ende eines Schienenfahrzeugs in einer Seitenansicht,
Fig.3 eine Ausführung der mechanischen Zwangsführung als Kulissenführung,
Fig.4 eine Ausführung der mechanischen Zwangsführung als Steilgewinde,
Fig.5 die Anordnung einer Federeinheit in der Ausführung mit Steilgewinde,
Fig.6 eine Ausführung der mechanischen Zwangsführung mit geneigten, aneinander anliegenden axialen Enden an den Scharnierteilen und
Fig.7 eine mögliche Anordnung von Scharnieren und einer Federeinheit an einer Nottür.

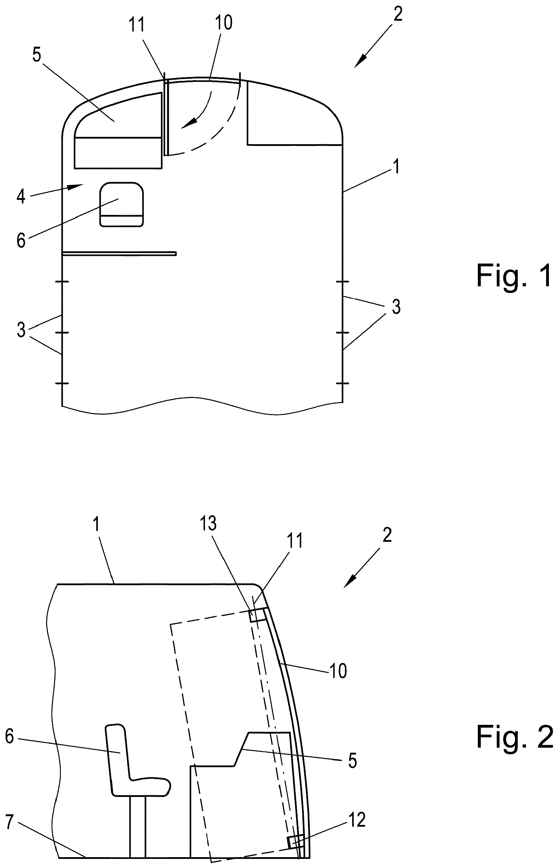

Die Fig.1 zeigt eine Draufsicht auf das stirnseitige Ende 2 eines Schienenfahrzeuges 1, beispielsweise einer U-Bahngarnitur. Angedeutet sind auch seitliche Betriebstüren 3, wobei diese natürlich auf beiden Seiten oder nur auf einer Seite vorgesehen sein können. Am stirnseitigen Ende 2 kann ein Fahrstand 4 mit einem Steuerpult 5 und einem Fahrersitz 6 vorgesehen sein, sowie in Fig.1 z.B. an einer Seite des Schienenfahrzeuges 1. Am stirnseitigen Ende 2 ist ferner eine Nottür 10 vorgesehen, die um eine Schwenkachse 11 nach innen schwenkend (wie durch den Pfeil angedeutet) angeordnet ist. Die Nottür 10 kann auch teilweise aus Glas bestehen. In Fig.1 ist strichliert auch die Nottür 10 in der geöffneten Lage angedeutet. Es ist selbstverständlich für die gegenständliche Erfindung unerheblich wo genau die Nottür 10 am stirnseitigen Ende 2 angeordnet ist, also zentral wie in Fig.1 oder an einer Seite. Ebenso kann eine solche Nottür 10 natürlich an beiden stirnseitigen Ende 2 des Schienenfahrzeuges 1 vorgesehen sein.

Die Fig.2 zeigt das stirnseitige Ende 2 in einer Seitenansicht. Hier ist erkennbar, dass das stirnseitige Ende 2 aus gestalterischen Gründen und/oder aus Gründen der Aerodynamik nicht vertikal ist, sondern schräg und/oder bombiert. Die Nottür 10 ist natürlich entsprechend geformt. Daraus ergibt sich ebenfalls eine nicht vertikale Schwenkachse 11. Die Schwenkachse 11 ist wie in Fig.2 gezeigt zum Innenraum des Schienenfahrzeugs 1 hin geneigt, also in einem spitzen Winkel zum Boden 7. Wenn die Nottür 10 um diese gegenüber der Vertikalen geneigte Schwenkachse 11 nach innen geöffnet wird, würde das von der Schwenkachse 11 entfernte untere Ende der Nottür 10 in den Boden 7 des Schienenfahrzeuges 1 fahren, was eine Öffnung verhindern würde. Zum Verschwenken sind natürlich zumindest zwei Scharniere 12, 13 an der Schwenkachse 11 vorgesehen.

Um dieses Problem zu beheben, ist die erfindungsgemäße Nottür 10 mit einer Hebefunktion ausgeführt, sodass die Nottür 10 beim Öffnen durch die Schwenkbewegung gehoben wird. Um das dabei Gewicht der Nottür 10 zumindest teilweise auszugleichen, ist gleichzeitig eine auf die Nottür 10 wirkende Federeinheit 30 vorgesehen, die das Gewicht der Nottür 10 zumindest teilweise ausgleicht.

Zur Realisierung der Hebefunktion ist an einem Scharnier 12, 13 eine mechanische Zwangsführung zwischen einem beweglichen Scharnierteil 21 und einem feststehende Scharnierteil 20 des Scharniers 12, 13 vorgesehen, die bei Schwenken der Nottür 10 in Öffnungsrichtung den beweglichen Scharnierteil 21 gegenüber dem feststehende Scharnierteil 20 in Richtung der Schwenkachse 11 nach oben verschiebt. Damit wird durch die mechanischen Zwangsführung beim Öffnen ein Höhengewinn hervorgerufen, womit die am Scharnier 12, 13 hängende Nottür 10 gehoben wird. Bei der umgekehrten Schließbewegung wird damit natürlich ein Absenken der Nottür 10 realisiert. Hierbei ist zumindest ein Scharnier 12, 13 der Nottür 10 mit einer derartigen Hebefunktion ausgeführt.

Diese mechanische Zwangsführung kann auf verschiedene Weise realisiert werden. Gemein ist den Ausführungen, dass an einem Scharnierteil des Scharniers 12, 13, also entweder am feststehenden Scharnierteil 20 oder am beweglichen Scharnierteil 21, eine Gleitfläche 22 vorgesehen ist, auf der beim Verschwenken der Nottür 10 ein Gleitelement 23, des jeweils anderen Scharnierteiles 20, 21 geführt wird, also beispielsweise abgleitet oder abrollt. Der feststehende Scharnierteil 20 ist in geeigneter Weise ortsfest im Schienenfahrzeug 1 angeordnet und die Nottür 10 ist mit dem beweglichen Scharnierteil 21 verbunden. Die Gleitfläche 22 ist dabei gegenüber einer Normalen auf die Schwenkachse 11, bzw. gegenüber einer Normalebene auf die Schwenkachse 11, um einen Winkel α geneigt, sodass durch das Zusammenwirken der Gleitfläche 22 mit dem Gleitelement 23, der bewegliche Scharnierteil 21 je nach Schwenkrichtung in Richtung der Schwenkachse 11 gehoben oder gesenkt wird. Der Winkel α muss dabei natürlich entlang der Gleitfläche 22 nicht gleich sein. Beispielsweise kann über den Winkel α zu Beginn der Öffnung ein geringerer Höhengewinn realisiert sein, als gegen Ende der Öffnungsbewegung. Der Winkel α ist so zu bemessen, dass sich beim vorgesehenen Öffnungswinkel der Nottür 10 der benötigte Höhengewinn der Nottür 10 ergibt. Typischerweise ist der Öffnungswinkel ungefähr 90° und der benötigte Höhengewinn im Bereich von 2cm bis 10cm. Damit ergibt sich je nach Schräglage des stirnseitigen Endes 2 ein typischer Winkel α von bis zu 80°.

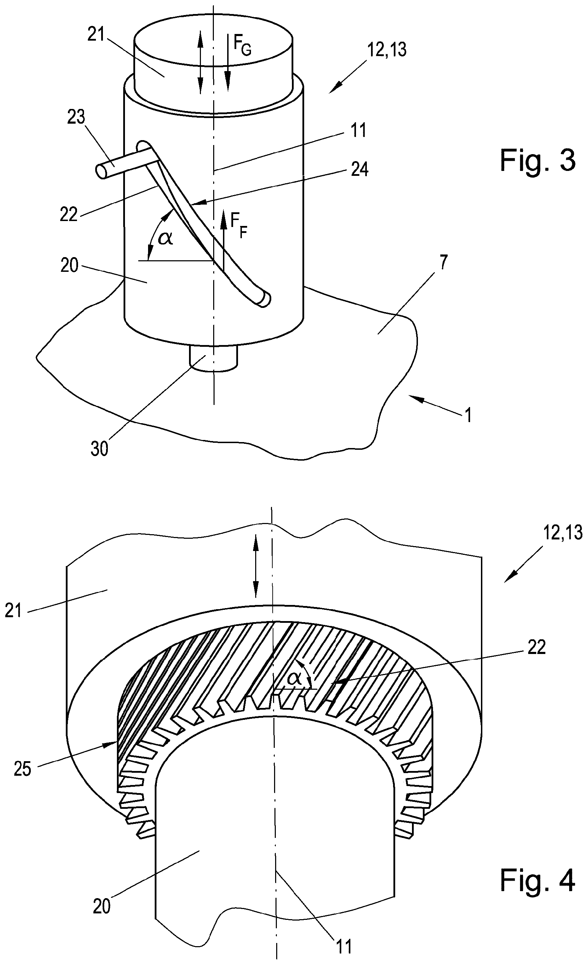

In Fig.3 ist die mechanische Zwangsführung als Kulissenführung ausgeführt. Der feststehende Scharnierteil 20 ist als Hülse ausgeführt, in der der bewegliche Scharnierteil 21 in Richtung der Schwenkachse 11 verschiebbar angeordnet ist. Am feststehenden Scharnierteil 20 ist eine um den Winkel α geneigte Kulisse 24 (im Wesentlichen ein Schlitz oder eine Vertiefung in der Hülse) vorgesehen, die die geneigte Gleitfläche 22 ausbildet. Am beweglichen Scharnierteil 21 ist als Gleitelement 23 ein radial abstehender Zapfen oder eine Rolle vorgesehen, wobei das Gleitelement 23 in der Kulisse 24 geführt ist. Selbstverständlich kann die Anordnung auch umgekehrt sein, also Gleitfläche 22 (Kulisse 24) am beweglichen Scharnierteil 21 und Gleitelement 23 am feststehenden Scharnierteil 20. Ebenso kann der bewegliche Scharnierteil 21 außen und der feststehende Scharnierteil 20 innen angeordnet sein.

Die Federeinheit 30 ist in dieser Ausgestaltung als Gasdruckfeder ausgeführt und im Inneren des feststehenden Scharnierteils 20 angeordnet. Die Federeinheit 30 greift am unteren axialen Ende des beweglichen Scharnierteil 21 an und übt damit eine Federkraft F_{F} entgegen der Gewichtskraft F_{G} der Nottür 10 aus. Die Federkraft F_{F} kann dabei so bemessen werden, dass die Gewichtskraft F_{G} zumindest teilweise ausgeglichen wird. Vorzugsweise wird zumindest 25%, besonders vorzugsweise zumindest 50% und ganz besonders vorzugsweise zumindest 75%, der Gewichtskraft F_{G} der Nottür 10 ausgeglichen. Im Idealfall kann die Gewichtskraft F_{G} der Nottür 10 zu 100% ausgeglichen werden. Ist die Federkraft F_{F} größer als die Gewichtskraft F_{G} könnte auch eine, zumindest teilweise, selbsttätig öffnende Nottür 10 realisiert werden. Selbstverständliche muss die Federeinheit 30 nicht im Inneren des feststehenden Scharnierteils 20 angeordnet sein, sondern kann an jeder beliebigen geeigneten Position angeordnet sein und an jeder geeigneten Stelle des Scharniers 12, 13 angreifen. Ebenso könnte die Federeinheit 30 als Spiralfeder oder Tellerfeder oder anderweitig ausgeführt sein. Nicht zuletzt könnte die Federeinheit 30 auch so angeordnet werden, dass diese den beweglichen Scharnierteil 21 nicht nach oben drückt, sondern diesen nach oben zieht.

Fig.4 zeigt eine Ausführung der mechanischen Zwangsführung mit einem Steilgewinde 25. Am feststehenden Scharnierteil 20 ist ein Außengewinde mit zumindest einem Gewindegang vorgesehen, wobei jeder Gewindegang eine Gleitfläche 22 ausbildet. Der bewegliche Scharnierteil 21 ist als Gewindehülse mit einem gegengleichen Innengewinde ausgeführt, der auf den feststehenden Scharnierteil 20 ausgeschraubt ist. Die Gewindegänge des Innengewindes (in Fig.4 nicht dargestellt) bilden dabei die Gleitelement 23 der Zwangsführung aus. Durch Verdrehen des beweglichen Scharnierteils 21 wird dieser wiederum gegenüber dem feststehenden Scharnierteil 20 je nach Drehrichtung gehoben oder gesenkt. Auch in dieser Ausführung kann die Anordnung umgekehrt sein, also der bewegliche Scharnierteil 21 mit Innengewinde und der feststehende Scharnierteil 20 mit Außengewinde.

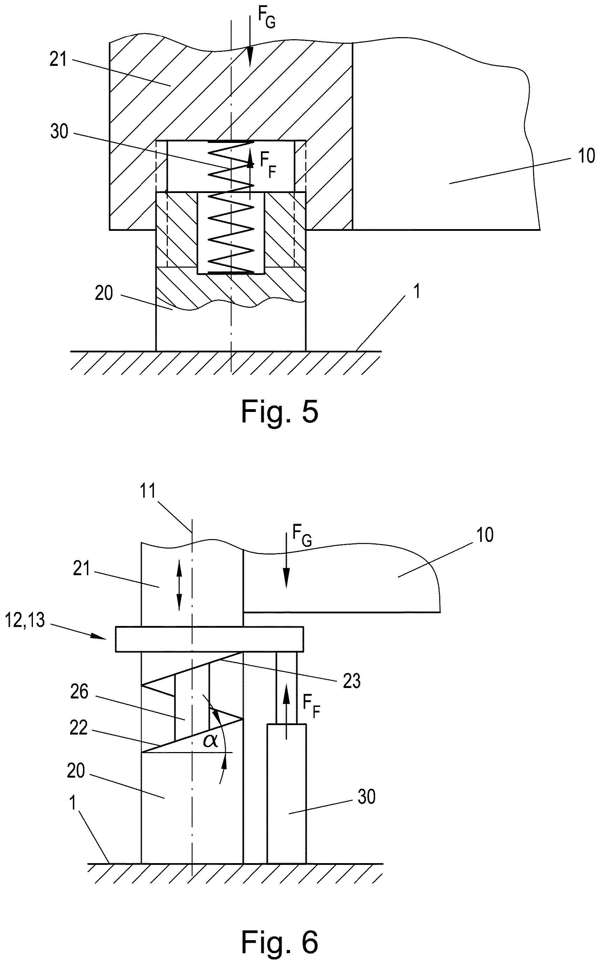

Die Federeinheit 30 könnte in dieser Ausgestaltung beispielsweise zwischen den einander zugewandten axialen Enden des beweglichen Scharnierteils 21 und des feststehenden Scharnierteils 20 angeordnet sein, wie in Fig.5 dargestellt. Die Federeinheit 30 kann wiederum als Spiralfeder (wie in Fig.5 angedeutet) oder als Gasdruckfeder oder als beliebig anderes geeignetes Federsystem ausgeführt sein. Auch in dieser Ausgestaltung könnte die Federeinheit 30 auch an beliebig anderer geeigneter Position angeordnet sein und/oder an beliebig anderer Stelle angreifen und/oder könnte auch wieder ziehen anstelle von drücken.

Eine weitere mögliche Ausgestaltung der mechanischen Zwangsführung ist in Fig.6 dargestellt. Die einander zugewandten axialen Enden des beweglichen Scharnierteils 21 und des feststehenden Scharnierteils 20 sind gegenüber der Normalen auf die Schwenkachse 11 um einen Winkel α geneigt. Die geneigten axialen Enden bilden dabei die Gleitfläche 22 und das Gleitelement 23 aus. Die axialen Enden können dabei auch schraubenförmig ausgeführt sein. Die axialen Enden liegen dabei zumindest teilweise axial aneinander und gleiten beim Verschwenken aneinander ab. Das axiale Ende des feststehenden Scharnierteil 20 ist beispielsweise das Gleitelement 22 und das axiale Ende des beweglichen Scharnierteils 21 das damit zusammenwirkende Gleitelement 23, oder umgekehrt. In dieser Ausgestaltung sind der feststehende Scharnierteil 20 und der bewegliche Scharnierteil 21 beispielsweise als Scharnierhülsen ausgeführt, die auf einen Scharnierbolzen 26 gesteckt sind. Der Scharnierbolzen 26 kann auch Teil des feststehenden oder beweglichen Scharnierteils 20 sein.

Die Federeinheit 30 ist in diesem Ausführungsbeispiel als Gasdruckfeder ausgeführt, die am beweglichen Scharnierteil 21 angreift und eine Federkraft F_{F} auf diesen ausübt. Die Federeinheit 30 könnte aber auch in dieser Ausgestaltung wie in Fig.5 dargestellt ausgeführt und angeordnet sein. Auch in dieser Ausgestaltung könnte die Federeinheit 30 auch an beliebig anderer geeigneter Position angeordnet sein und/oder an beliebig anderer Stelle angreifen und/oder könnte auch wieder ziehen anstelle von drücken.

In allen Ausführungen könnten natürlich an einem Scharnier 12, 13 auch mehrere Federeinheiten 30, auch unterschiedliche (beispielsweise drückende und ziehende), vorgesehen sein. Ebenso kann an mehreren Scharnieren 12, 13 eine Federeinheit 30, oder mehrere Federeinheiten 30, vorgesehen sein.

Ebenso ist es möglich, dass ein Scharnier 12, 13 mit der mechanischen Zwangsführung ausgeführt ist, und ein anderes Scharnier mit einer Federeinheit 30. Mechanische Zwangsführung und Federeinheit müssen damit nicht zwingend am selben Scharnier 12, 13 realisiert sein. Beispielsweise kann an nur einem Scharnier 12, 13 die mechanische Zwangsführung ausgeführt sein und an mehreren Scharnieren 12, 13 zumindest eine Federeinheit 30 vorgesehen sein. Die Federeinheit 30 muss nicht einmal zwingend an einem Scharnier 12, 13 der Nottür 10 angeordnet sein, sondern kann auch an anderer geeigneter Stelle auf die Nottür 10 wirken.

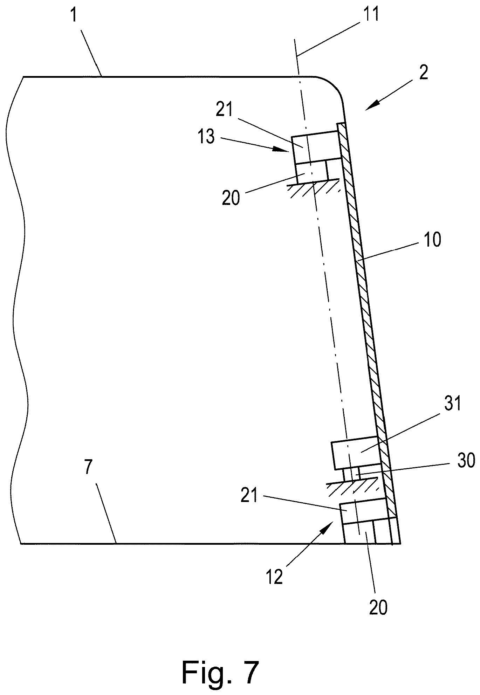

In Fig.7 ist eine Ausgestaltung einer Nottür 10 dargestellt mit einem oberen Scharnier 13 und einem unteren Scharnier 12 mit jeweils einem beweglichen Scharnierteil 21 und einem feststehenden Scharnierteil 20 mit mechanischer Zwangsführung zur Realisierung der Hebefunktion, beispielsweise wie mit Bezugnahme auf die Fig.3, 4 und 6 beschrieben. An der Nottür 10 ist eine Lasche 31 angeordnet, an der die Federeinheit 30, beispielsweise eine Gasdruckfeder, angreift. Zusätzlich, oder alternativ, könnte eine weitere Federeinheit 30 auch an einem Scharnier 12, 13 vorgesehen sein. Auch könnte nur eines der Scharniere 12, 13 mit der mechanischen Zwangsführung ausgeführt sein.

## Patentansprüche

1. Nottür für ein Schienenfahrzeug (1), wobei die Nottür (10) mittels Scharnieren (12, 13) um eine Schwenkachse (11) nach innen verschwenkbar an einer Stirnseite des Schienenfahrzeugs anordenbar ist, wobei jedes Scharnier (12, 13) einen feststehenden Scharnierteil (20), der mit dem Schienenfahrzeug (1) verbindbar ist, und einen beweglichen Scharnierteil (21), der mit der Nottür (10) verbunden ist, aufweist, **dadurch gekennzeichnet, dass** zumindest ein Scharnier (12, 13) mit einer mechanischen Zwangsführung zwischen dem feststehenden Scharnierteil (20) und dem beweglichen Scharnierteil (21) ausgeführt ist, die beim Schwenken um die Schwenkachse (11) den beweglichen Scharnierteil (21) gegenüber dem feststehenden Scharnierteil (20) in Richtung der Schwenkachse (11) verschiebt **und dass** zumindest eine Federeinheit (30) vorgesehen ist, die eine entgegen der Gewichtskraft (F_{G}) der Nottür (10) gerichtete Federkraft (F_{F}) auf die Nottür (10) ausübt.

2. Nottür nach Anspruch 1, **dadurch gekennzeichnet, dass** zur mechanischen Zwangsführung eine Gleitfläche (22) am feststehenden Scharnierteil (20) oder beweglichen Scharnierteil (21), wobei die Gleitfläche (22) gegenüber einer Normalen auf die Schwenkachse (11) geneigt ist, und ein mit der Gleitfläche (22) zusammenwirkendes Gleitelement (23) am jeweils anderen Scharnierteil (20, 21) vorgesehen sind.

3. Nottür nach Anspruch 2, **dadurch gekennzeichnet, dass** die mechanische Zwangsführung als Kulissenführung mit einer Kulisse (24) im feststehenden Scharnierteil (20) oder beweglichen Scharnierteil (21) als Gleitfläche (22) und mit einem in der Kulisse (24) geführten Gleitelement (23) ausgeführt ist.

4. Nottür nach Anspruch 2, **dadurch gekennzeichnet, dass** die mechanische Zwangsführung als Steilgewinde (25) mit einem Außengewinde mit zumindest einem Gewindegang am feststehenden Scharnierteil (20) oder beweglichen Scharnierteil (21) als Gleitfläche (22) und mit einem Innengewinde am anderen Scharnierteil (20, 21) als Gleitelement (23) ausgeführt ist, wobei das Außengewinde in das Innengewinde geschraubt ist.

5. Nottür nach Anspruch 2, **dadurch gekennzeichnet, dass** am feststehenden Scharnierteil (20) ein geneigtes axiales Ende vorgesehen ist und ein dem feststehenden Scharnierteil (20) zugewandtes axiales Ende des beweglichen Scharnierteils (21) axial geneigt ausgeführt ist und die beiden geneigten axialen Enden zur mechanische Zwangsführung zumindest teilweise aneinander anliegend angeordnet sind.

6. Nottür nach Anspruch 5, **dadurch gekennzeichnet, dass** die geneigten axialen Enden schraubenförmig ausgeführt sind.

7. Nottür nach Anspruch 5 oder 6, **dadurch gekennzeichnet, dass** das bewegliche Scharnierteil (21) und feststehende Scharnierteil (20) als Scharnierhülse ausgeführt sind, die auf einen Gewindebolzen (26) gesteckt sind **oder dass** an einem Scharnierteil (20, 21) ein Gewindebolzen (26) angeordnet ist, auf dem das andere als Scharnierhülsen ausgeführte Scharnierteil (20, 21) gesteckt ist.

8. Nottür nach einem der Ansprüche 1 bis 7, **dadurch gekennzeichnet, dass** die zumindest eine Federeinheit (30) an einem beweglichen Scharnierteil (21) eines Scharniers (12, 13) der Nottür (10) angreift.

9. Nottür nach Anspruch 8, **dadurch gekennzeichnet, dass** die Federeinheit (30) zwischen feststehendem Scharnierteil (20) und beweglichem Scharnierteil (21) angeordnet ist.

10. Nottür nach einem der Ansprüche 1 bis 9, **dadurch gekennzeichnet, dass** die zumindest eine Federeinheit (30) als Gasdruckfeder ausgeführt ist.

## Claims

1. Emergency door for a rail vehicle (1), it being possible for the emergency door (10) to be arranged on an end of the rail vehicle by means of hinges (12, 13) such that said emergency door (10) can be pivoted inward about a pivot axis (11), each hinge (12, 13) having a stationary hinge part (20) which can be connected to the rail vehicle (1) and a movable hinge part (21) which is connected to the emergency door (10), **characterized in that** at least one hinge (12, 13) is designed to have mechanical restricted guidance between the stationary hinge part (20) and the movable hinge part (21), which guidance, during pivoting about the pivot axis (11), slides the movable hinge part (21) in relation to the stationary hinge part (20) in the direction of the pivot axis (11), **and in that** at least one spring unit (30) is provided which exerts, on the emergency door (10), a spring force (F_{F}) directed against the weight (F_{G}) of the emergency door (10).

2. Emergency door according to claim 1, **characterized in that** for the mechanical restricted guidance, a sliding surface (22) is provided on the stationary hinge part (20) or the movable hinge part (21), the sliding surface (22) being inclined relative to a normal to the pivot axis (11), and a sliding element (23) interacting with the sliding surface (22) being provided on the other hinge part (20, 21).

3. Emergency door according to claim 2, **characterized in that** the mechanical restricted guidance is designed as a slotted guide system having a slot (24) in the stationary hinge part (20) or the movable hinge part (21) as the sliding surface (22) and having a sliding element (23) guided in the slot (24).

4. Emergency door according to claim 2, **characterized in that** the mechanical restricted guidance is designed as a quick-acting screw thread (25) having an external thread with at least one thread turn on the stationary hinge part (20) or the movable hinge part (21) as the sliding surface (22) and having an internal thread on the other hinge part (20, 21) as the sliding element (23), the external thread being screwed into the internal thread.

5. Emergency door according to claim 2, **characterized in that** an inclined axial end is provided on the stationary hinge part (20) and an axial end of the movable hinge part (21) facing the stationary hinge part (20) is designed to be axially inclined, and the two inclined axial ends are arranged so as to bear at least partially against one another for the mechanical restricted guidance.

6. Emergency door according to claim 5, **characterized in that** the inclined axial ends are helical.

7. Emergency door according to either claim 5 or claim 6, **characterized in that** the movable hinge part (21) and the stationary hinge part (20) are designed as hinge sleeves which are pushed onto a threaded bolt (26) or **in that**, on a hinge part (20, 21), a threaded bolt (26) is arranged on which the other hinge part (20, 21) designed as a hinge sleeve is pushed.

8. Emergency door according to any of claims 1 to 7, **characterized in that** the at least one spring unit (30) acts on a movable hinge part (21) of a hinge (12, 13) of the emergency door (10).

9. Emergency door according to claim 8, **characterized in that** the spring unit (30) is arranged between the stationary hinge part (20) and the movable hinge part (21).

10. Emergency door according to any of claims 1 to 9, **characterized in that** the at least one spring unit (30) is designed as a gas spring.

## Revendications

1. Porte d'urgence pour véhicule ferroviaire (1), la porte d'urgence (10) pouvant être disposée sur une face frontale du véhicule ferroviaire au moyen de charnières (12, 13) de manière à pouvoir pivoter vers l'intérieur autour d'un axe de pivotement (11), chaque charnière (12, 13) présentant une partie de charnière fixe (20) pouvant être reliée au véhicule ferroviaire (1)
et une partie de charnière mobile (21) reliée à la porte d'urgence (10), **caractérisée en ce qu'**au moins une charnière (12, 13) est conçue avec un guidage forcé mécanique entre la partie de charnière fixe (20) et la partie de charnière mobile (21), lequel guidage forcé déplace, lors d'un pivotement autour de l'axe de pivotement (11), la partie de charnière mobile (21) par rapport à la partie de charnière fixe (20) dans la direction de l'axe de pivotement (11), **et en ce qu'**au moins une unité de ressort (30) est prévue, laquelle exerce sur la porte d'urgence (10) une force de ressort (F_{F}) dirigée contre la force de poids (F_{G}) de la porte d'urgence (10).

2. Porte d'urgence selon la revendication 1, **caractérisée en ce que,** pour le guidage forcé mécanique, une surface de glissement (22) est prévue sur la partie de charnière fixe (20) ou la partie de charnière mobile (21), la surface de glissement (22) étant inclinée par rapport à une normale sur l'axe de pivotement (11), et un élément de glissement (23) coopérant avec la surface de glissement (22) est prévu sur l'autre partie de charnière (20, 21).

3. Porte d'urgence selon la revendication 2, **caractérisée en ce que** le guidage forcé mécanique est réalisé sous forme de guide de coulisse comportant une coulisse (24) dans la partie de charnière fixe (20) ou dans la partie de charnière mobile (21), en tant que surface de glissement (22) et comportant un élément de glissement (23) guidé dans la coulisse (24).

4. Porte d'urgence selon la revendication 2, **caractérisée en ce que** le guidage forcé mécanique est réalisé sous forme de filetage à pas rapide (25) comportant un filetage extérieur ayant au moins un pas de filetage sur la partie de charnière fixe (20) ou sur la partie de charnière mobile (21), en tant que surface de glissement (22) et comportant un filetage intérieur sur l'autre partie de charnière (20, 21) en tant qu'élément de glissement (23), le filetage extérieur étant vissé dans le filetage intérieur.

5. Porte d'urgence selon la revendication 2, **caractérisée en ce qu'**une extrémité axiale inclinée est prévue sur la partie de charnière fixe (20) et une extrémité axiale de la partie de charnière mobile (21) faisant face à la partie de charnière fixe (20) est conçue pour être inclinée axialement, et les deux extrémités axiales inclinées sont disposées au moins partiellement adjacentes l'une à l'autre par rapport au guidage forcé mécanique.

6. Porte d'urgence selon la revendication 5, **caractérisée en ce que** les extrémités axiales inclinées sont hélicoïdales.

7. Porte d'urgence selon la revendication 5 ou 6, **caractérisée en ce que** la partie de charnière mobile (21) et la partie de charnière fixe (20) sont réalisées sous forme de douilles de charnière qui sont enfoncées sur un boulon fileté (26), **ou en ce qu'**un boulon fileté (26) est disposé sur une partie de charnière (20, 21), sur lequel est enfoncée l'autre partie de charnière (20, 21) réalisée sous forme de douille de charnière.

8. Porte d'urgence selon l'une des revendications 1 à 7, **caractérisée en ce que** l'au moins une unité de ressort (30) vient en prise sur une partie de charnière mobile (21) d'une charnière (12, 13) de la porte d'urgence (10).

9. Porte d'urgence selon la revendication 8, **caractérisée en ce que** l'unité de ressort (30) est disposée entre la partie de charnière fixe (20) et la partie de charnière mobile (21).

10. Porte d'urgence selon l'une des revendications 1 à 9, **caractérisée en ce que** l'au moins une unité de ressort (30) est réalisée sous la forme de ressort à pression de gaz.
